# EUROPEAN PATENT APPLICATION

(11) **EP 1 289 247 A2**
(43) Date of publication of application: **05.03.2003**
(21) Application number: 02255407.5
(22) Date of filing: 01.08.2002
(51) Int. Cl.: H04M 3/56, H04R 1/40, H04R 3/00

(54) **System and method of indicating and controlling sound pickup direction and location in a teleconferencing system**

(30) Priority: 31.08.2001 GB 0121206
(71) Applicant: Mitel Knowledge Corporation, Kanata, Ontario K2K 2W7 (CA)
(72) Inventor: Beaucoup, Franck, Dunrobin, Ontatrio K0A 1T0 (CA); Moquin, Philippe, Kanata, Ontario K2K 2H7 (CA); Thompson, Graham H., Kanata, Ontario K2K 1X7 (CA); Fletcher, Jodie, Ottawa, Ontario K1H 8N7 (CA)
(74) Representative: Naismith, Robert Stewart

(57) **Abstract**

A method of identifying talker location includes picking up audio signals using a steerable microphone array and processing the picked up audio signals to determine the location of an active talker. The microphone array is then steered in the direction of the active talker and a cue is generated to identify the direction in which the microphone array has been steered. The cue is a visual one, generated by LED'S (56a-56f), which are placed at the microphones.

## Description

### Field Of The Invention

The present invention relates generally to audio systems and in particular to a system and method of indicating and controlling sound pickup direction and location in a teleconferencing system.

### Background Of The Invention

Teleconferencing systems are known in the art. In some conventional teleconferencing systems, individual microphones are positioned close to each teleconference participant. When a participant wishes to speak, the microphone associated with that participant is enabled. A light in close proximity to the selected microphone is illuminated to provide a visual indication that the microphone is active.

An example of a teleconferencing system of the above-described type is the Sennheiser/Televic TMS 1000. This type of teleconferencing system is often used in elected assemblies and includes a unit for each participant. Each unit includes a microphone, a light and usually some type of signalling device. One unit having "chairman" functionality is also provided. When the microphone in the "chairman" unit is turned on, the microphones in the other units are inhibited from becoming enabled.

Other teleconferencing systems having similar functionality also exist. For example, one type of custom legislative assembly teleconferencing system basically operates in the same manner as the above-described teleconferencing system except that the unit associated with the "speaker" includes an override button. When the override button is pressed, the speaker's microphone is enabled and the other microphones are inhibited from becoming enabled.

Unfortunately, these types of teleconferencing systems suffer disadvantages. In particular, these systems require discrete microphones and associated cabling for each participant making installation expensive and onerous since specialized personnel to install the systems are required. Also, these teleconferencing systems are not intuitive to users. Furthermore, the unit that is assigned "chairman" or "speaker" status is hardwired. While this acceptable in a legislative setting, it is unsatisfactory in many environments.

Single unit teleconferencing systems also exist. This type of teleconferencing system typically includes three microphones. The teleconferencing system automatically selects the active microphone but unfortunately provides no indication as to the actual microphone that has been selected. As a result, speakers are unable to determine if the microphones close to them are active. As will be appreciated, improvements to teleconferencing systems are desired.

It is therefore an object of the present invention to provide a novel system and method of indicating and controlling sound pickup direction and location in a teleconferencing system.

### Summary Of The Invention

According to one aspect of the present invention there is provided a method of identifying talker location comprising the steps of:
picking up audio signals using a steerable microphone array;
processing the picked up audio signals to determine the location of an active talker;
steering the microphone array in the direction of the active talker; and
generating a cue to identify the direction in which the microphone array has been steered.

In the preferred embodiment, the cue is a visual cue. Preferably, the cue is generated by illuminating a light source. In one embodiment, the light source is a light emitting diode. Preferably, the microphone array can be frozen in the direction in which the microphone array has been steered in response to an input command. In this case, the illuminated light emitting diode is flashed to indicate visually that the microphone array will not be steered if the location of the active talker changes. It is also preferred that the microphone array can be muted. In this case, the colour of the light emitting diode is changed.

According to another aspect of the present invention there is provided a method of identifying talker location comprising the steps of:
picking up audio signals;
processing the audio signals to determine the location of an active talker; and
generating a visual cue that identifies the location of said active talker.

According to yet another aspect of the present invention there is provided a method of identifying talker location comprising the steps of:
picking up audio signals using a circular microphone array including a plurality of omni-directional microphones;
processing the picked up audio signals to determine the location of an active talker;
using the omni-directional microphones to synthesize narrow microphone beams pointing in the direction of the active talker; and
generating a cue to identify the microphone beam focus direction.

According to still yet another aspect of the present there is provided a conference unit comprising:
a loudspeaker to broadcast audio signals;
a steerable microphone array to pick up audio signals;
a processor to process picked up audio signals to determine the location of an active talker and steer the microphone array in the direction of said talker; and
an indicator array responsive to said processor and including a plurality of indicators, each indicator being associated with a different microphone array steer direction, the indicator associated with the direction the microphone array has been steered being activated.

The present invention provides advantages in that a visual indication or cue of the microphone array's microphone beam focus direction is provided. In this manner, an active talker can determine visually if the microphone array is steered in the proper direction to provide high quality audio. Also, since the microphone beam focus direction can be frozen, a talker can ensure the microphone array does not get steered in a different direction in response to audio signals generated by other sources. This is particularly beneficial in many situations such as during presentations and readings of prepared statements where it is desired to inhibit side conversations from being picked up.

### Brief Description Of The Drawings

Embodiments of the present invention will now be described more fully with reference to the accompanying drawings in which:
Figure 1 is a schematic diagram of a teleconferencing system including a conference unit and a conference control interface in accordance with the present invention;
Figure 2 is a schematic block diagram of the teleconferencing system of Figure 1;
Figure 3 is a schematic block diagram of a controller forming part of the conference unit shown in Figure 1;
Figure 4 is a schematic block diagram of a microcontroller forming part of conference control interface shown in Figure 1;
Figure 5 shows the conference unit visual indicator array and omni-directional microphone array as well as the narrow microphone beams that can be synthesized using the omni-directional microphone array;
Figure 6 shows the conference unit visual indicator array and omni-directional microphone array of Figure 5, with the visual indicator array providing a visual indication of the omni-directional microphone array beam focus direction;
Figure 7 shows an alternative conference unit visual indicator array and omni-directional microphone array as well as the narrow microphone beams that can be synthesized using the omni-directional microphone array;
Figure 8 shows the conference unit visual indicator array and omni-directional microphone array of Figure 7, with the visual indicator array providing a visual indication of the omni-directional microphone array beam focus direction; and
Figure 9 shows another alternative conference unit visual indicator array.

### Detailed Description Of The Preferred Embodiments

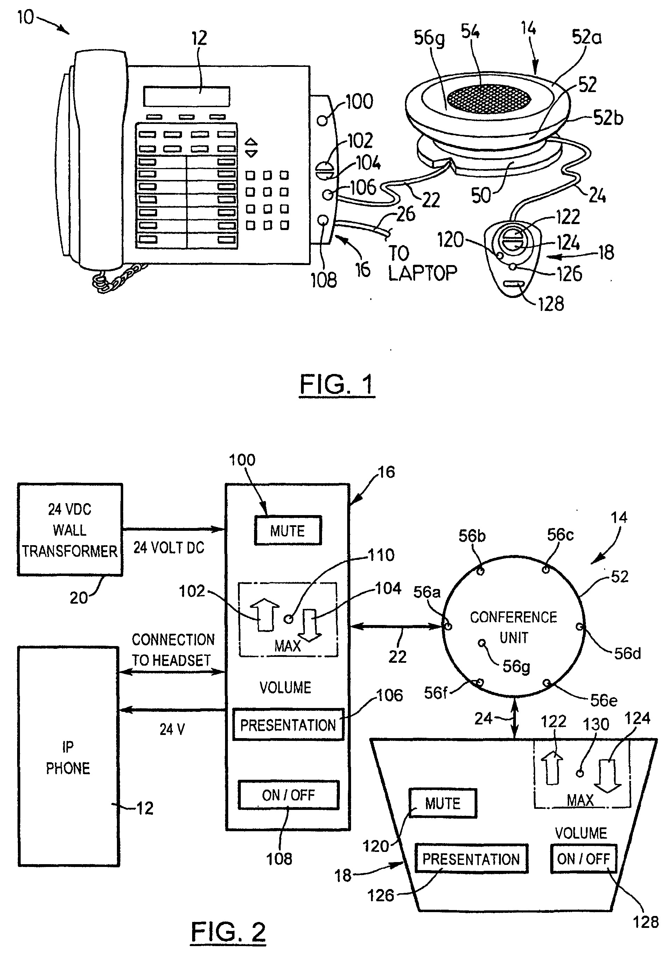

Turning now to Figures 1 and 2, a teleconferencing system is shown and is generally identified by reference numeral 10. As can be seen, teleconferencing system 10 includes an IP telephone set 12 such as that manufactured by Mitel Networks Corporation of Ottawa, Ontario under model No. 5020, a conference unit 14, a conference control interface 16, an optional movable control unit 18 and a power supply 20 in the form of a 120VAC to 24VDC wall transformer.

Conference unit 14 is electrically coupled to both the conference control interface 16 and the movable control unit 18. Specifically, the conference unit 14 and the conference control interface 16 are coupled by an 8-wire RJ-45 CAT-5 cable 22 while the conference unit 14 and the movable control unit 18 are coupled by a 4-wire modular connector cable 24.

Turning now to Figures 1 to 3 the conference unit 14 is better illustrated. As can be seen, conference unit 14 includes a circular base 50 having ports to receive the cables 22 and 24. A partly spherical body 52 rests on the base 50. The body includes a top 52a and a clear plastic see-through ring 52b below the top. A screen 54 is centrally positioned on the top of the body 52. A loudspeaker 60 and a steerable, circular microphone array including six (6) equally spaced omni-directional microphones 62 that surround the loudspeaker 60 are positioned within the body 52 below the screen 54. A plurality of light emitting diodes (LEDs) 56a to 56g are mounted on a board (not shown) within the body. The LEDs communicate with light pipes that extend to the ring 52b. The light pipes disperse light at a broad angle equal to about 60⁰ when their associated LEDs are illuminated. The diodes 56a to 56f are dual color and are positioned near the periphery of the body 52 at equal circumferentially spaced locations. The diodes 56a to 56f serve as visual indicators or cues to identify the direction in which the omni-directional microphone array is steered and the mode of operation of the conference unit 14. Diode 56g is an on/off visual indicator and is located on the top of the body 52. A controller 58 is mounted on the board within the body 52 and is electrically connected to the cables 22 and 24 and to the LEDs 56a to 56g. Controller 58 is also electrically coupled to the loudspeaker 60 and to the array of omni-directional microphones 62.

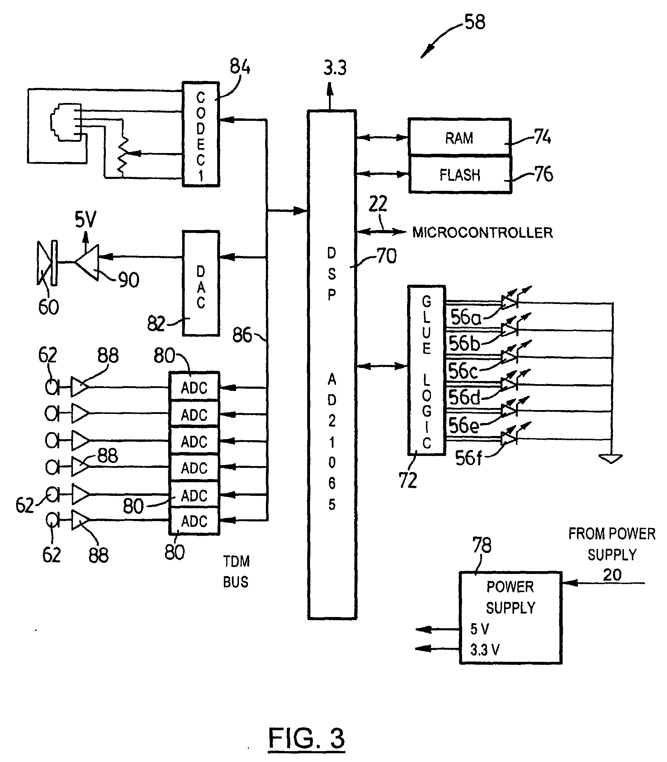

As illustrated in Figure 3, the controller 58 includes a digital signal processor (DSP) 70, glue logic 72, RAM and Flash memory 74 and 76 respectively, a power converter 78, an array of analog-to-digital converters (ADCs) 80, a digital-to-analog converter (DAC) 82 and a coder/decoder (Codec) 84. The DSP 70 is coupled to the ADCs 80, DAC 82 and Codec 84 via a TDM bus 86. Each ADC 80 is associated with a respective one of the omni-directional microphones 62 and is connected to its associated microphone 62 via a microphone amplifier 88. The DAC 82 is connected to the loudspeaker 60 via a speaker driver 90. The Codec 84 is connected to the port that receives the cable 22 and is coupled to 4 wires of the cable 22 that carry balanced audio receive and transmit signals.

The DSP 70 is also directly coupled to the port that receives the cable 22 and communicates with the conference control interface 16 over 2 wires of the cable 22. The communications channel between the DSP 70 and the conference control interface 16 over these 2 wires is a 300 baud asynchronous communications channel. This communications channel carries messages generated by the conference control interface 16 to allow the operation of the conference unit 14 to be controlled. The DSP 70 is also directly coupled to the port that receives the cable 24 and communicates with the movable control unit 18 over 2 wires of the cable 24. Similar to the conference control interface 16, the communications channel between the DSP 70 and the movable control unit 18 over these 2 wires is a 300 baud asynchronous communications channel. This communications channel carries messages generated by the movable control unit 18 to allow the operation of the conference unit 14 to be controlled. DSP 70 is further coupled to the glue logic 72 to enable the DSP to control illumination of the LEDs 56a to 56g as will be described.

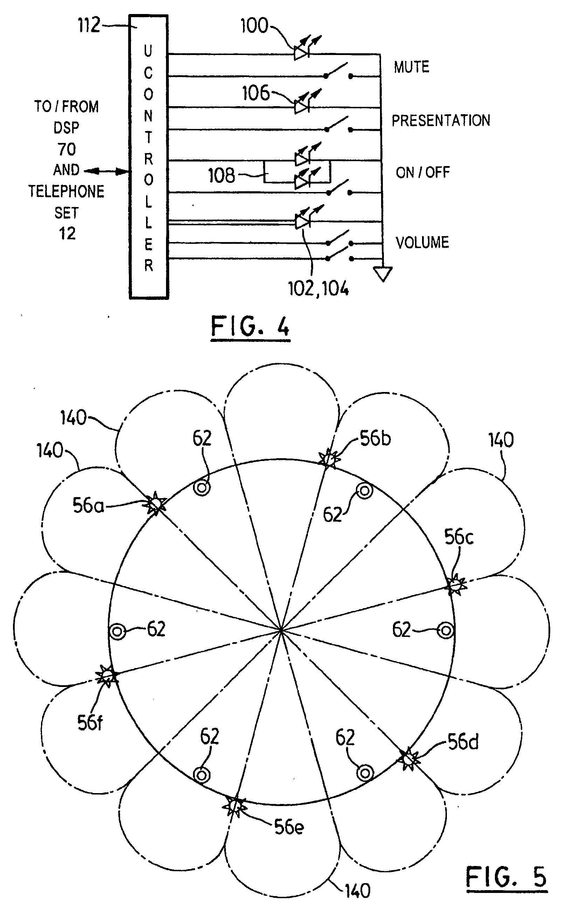

The DSP 70 is programmed to perform beamforming, beamsteering and acoustic echo cancellation, which provides a high quality full-duplex teleconferencing environment. During execution of the beamforming algorithm, the DSP 70 uses the microphones 62 to synthesize one or more narrow acceptance angles or microphone beams. Examples of beamformers that use omni-directional microphones to synthesize narrow microphone beams can be found in U.S. Patent No. 6,041,127 to Elko, U.S. Patent No. 4,741,038 to Elko et al, U.S. Patent No. 5,581,620 to Brandstein et al, U.S. Patent No. 5,506,908 to Baumhauer, Jr. et al and Canadian Patent Document No. 2,292,357 to Stinson et al. In this particular example as shown in Figure 5, the beamforming algorithm uses the microphones 62 to synthesize twelve narrow microphone beams 140 over 360°. Since the microphones 62 can be used to synthesize twelve narrow microphone beams 140 and since the conference unit 14 only includes six LEDs 56a to 56f, each LED is associated with the direction of two adjacent microphone beams 140.

During execution of the beamsteering algorithm, the DSP 70 processes audio signals picked up by the microphones 62 to determine the location of the active talker in the surrounding environment based on the microphone beam that picks up audio signals having the highest energy level. The determined talker location is then used during execution of the beamforming algorithm to steer the synthesized microphone beams in the direction of the active talker. In this manner, side conversations, extraneous noise and reverberation signals picked up by the microphones 62 is reduced thereby enhancing the audio quality. An example of beamsteering of this nature is described in U.K. Patent Application No. 0016142 filed on June 30, 2000 for an invention entitled "Method and Apparatus For Locating A Talker".

Figures 1, 2 and 4 better illustrate the conference control interface 16 and as can be seen, the conference control interface 16 is physically attached neatly to the side of the telephone set 12. Conference control interface 16 is coupled to the power supply 20 to enable power to be supplied to the telephone set 12 and to conference unit 14. Power from the power supply 20 is supplied to the conference unit 14 over 2 wires of the cable 22. Conference control interface 16 is also coupled to the headset jack and 10/100T Ethernet jack of the telephone set 12. A jack is also provided on the conference control interface 16 to enable the conference control interface 16 to be coupled to a personal computer via a cable 26.

The front panel of the conference control interface 16 includes a number of controls to allow a user to control the conference unit 14. Specifically, the conference control interface 16 includes a mute button 100, increase and decrease volume buttons 102 and 104 respectively, a presentation button 106 and an on/off button 108. The conference control interface 16 also includes an LED 110 that is illuminated when the conference unit 14 is on. The conference control interface 16 houses a microcontroller 112 that interprets signals from both the telephone set 12 and the conference unit 14 to permit a smooth interface between the telephone set 12 and the DSP 70 of the conference unit 14. Audio receive and transmit signals are exchanged between the telephone set 12 and the conference unit 14 over the designated 4 wires of the cable 22. The microcontroller 112 is also responsive to the actuation of the buttons 100 to 108 and generates appropriate messages that are conveyed to the DSP 70 of the conference unit 14 over the 300 baud asynchronous communications channel when the DSP 70 polls the microcontroller 112.

The movable control unit 18 is shaped to resemble a conventional computer mouse. Similar to the conference control interface 16, the movable control unit 18 includes a number of controls to allow a user to control the conference unit 14. Specifically, the movable control unit 18 includes a mute button 120, increase and decrease volume buttons 122 and 124 respectively, a presentation button 126 and an on/off button 128. The movable control unit 18 also includes an LED 130 that is illuminated when the conference unit 14 is on. Although not shown, the movable control unit 18 houses a microcontroller that is responsive to the actuation of the buttons 120 to 128 and generates appropriate messages that are conveyed to the DSP 70 of the conference unit 14 over the 300 baud asynchronous communications channel when the DSP 70 polls the microcontroller 112. As will be appreciated, the movable control unit 18 duplicates much of the conference control interface functionality.

During operation, when the conference unit 14 is off, the telephone set 12 functions in a conventional manner. In order to activate the conference unit 14, it is necessary either to toggle the on/off button 108 on the conference control interface 16.

When the on/off button 108 has been toggled, the microcontroller 112 illuminates the LED 110 and permits the power supply 20 to supply power to the power converter 78 via the cable 22 thereby to power the conference unit 14. With the conference unit 14 powered, the DSP 70 signals the glue logic 72 to illuminate the diode 56g and then enters an automatic mode. The hands-free speaker on the telephone set 12 is also disabled.

In the automatic mode, audio transmit signals received by the telephone set 12 are conveyed to the conference unit 14 via the cable 22 and pass through Codec 84 and DSP 70 before being conveyed to the loudspeaker 60 via the TDM bus 86 and speaker driver 90 for broadcast. Audio receive signals picked up by the microphones 62 are conveyed to the DSP 70 via the amplifiers 88 and TDM bus 86 before being conveyed to the telephone set 12 over the cable 22.

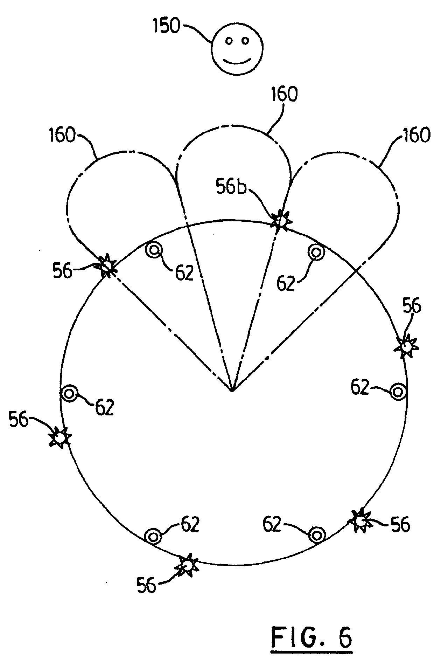

When audio signals are picked up by the microphones 62 and delivered to the DSP 70, the DSP, which executes the beamsteering algorithm, determines the location of the active talker in the surrounding environment. The active talker location is then used by the beamforming algorithm executed by the DSP 70 to steer the omni-directional microphone array towards the talker 150 by synthesizing narrow microphone beams 140 in the talker direction as shown in Figure 6. The DSP 70 also signals the glue logic 72 to illuminate the LED 56b associated with the direction of the synthesized microphone beams 140. In this case, the illuminated LED is constantly illuminated and is green in color. If the talker 150 changes position and the direction of the strongest audio signals received by the microphone array changes, the DSP 70 re-steers the microphone array and illuminates the LED associated with the direction of the newly synthesized microphone beams. As will be appreciated, in this manner the LEDs provide a visual indication to the active talker and others surrounding the conference unit 14, of the microphone array microphone beam focus direction.

When the increase volume button 102 or decrease volume button 104 is toggled, the microcontroller 112 generates a message that is conveyed to the DSP 70 when the microcontroller 112 is polled causing the DSP to increase or decrease the volume of audio broadcast by the loudspeaker 60.

When the presentation button 106 is toggled, the microcontroller 112 generates a message that is conveyed to the DSP 70 when the microcontroller 112 is polled causing the DSP to enter a presentation mode. In the presentation mode, the DSP 70 freezes execution of the beamsteering algorithm and thereby freezes the microphone array microphone beam focus direction. The beamforming algorithm is however executed to synthesize three narrow microphone beams 160 (see Figure 6) that are in the direction of the talker 150. Freezing beamsteering is beneficial during presentations and readings of statements where it is desired to focus audio pickup on the speaker and inhibit side conversations, noise signals and reverberation signals from being picked up. Also, since three narrow microphone beam 160 are synthesized in this mode, the speaker is able to wander slightly while still ensuring that high quality audio is picked up by the microphone array. The DSP 70 also signals the glue logic 72 which in turn flashes the illuminated LED 56b to indicate visually to the talker 150 that the DSP 70 is in the presentation mode and will not re-steer the microphone array. Toggling the presentation button 106 again returns the DSP 70 to the automatic mode.

When the mute button 100 is toggled, the microcontroller 112 generates a message that is conveyed to the DSP 70 when the microcontroller 112 is polled causing the DSP 70 to enter a mute mode. In the mute mode, the DSP 70 inhibits audio signals picked up by the microphones 62 from being conveyed to the telephone set 12. The DSP 70 also signals the glue logic 72, which in turn illuminates all of the LEDs. In this case, the illuminated LEDs are constantly illuminated and are amber in color. Toggling the mute button 100 again returns the DSP 70 to the automatic mode. If the DSP 70 is in the presentation mode when the mute button 100 is toggled, the DSP 70 enters the mute mode and signals the glue logic 72 to illuminate all of the LEDs so that they are amber in color. When the mute button 100 is toggled again, the DSP 70 returns to the presentation mode. Although not described, when the buttons on the movable control unit 18 are toggled, the conference unit 14 is controlled in the same manner as described above.

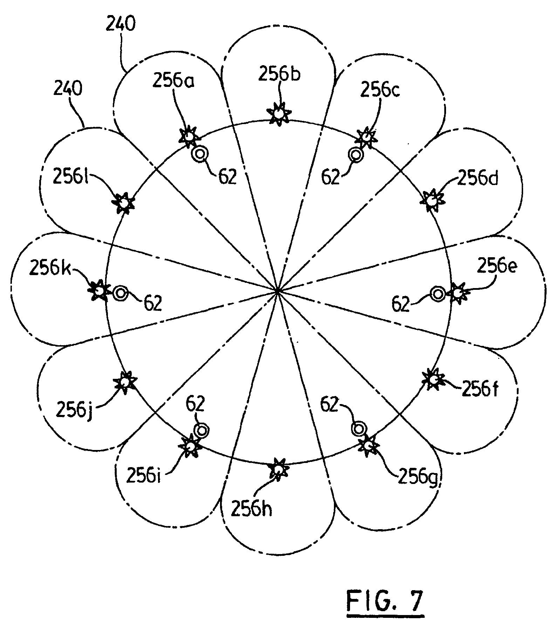

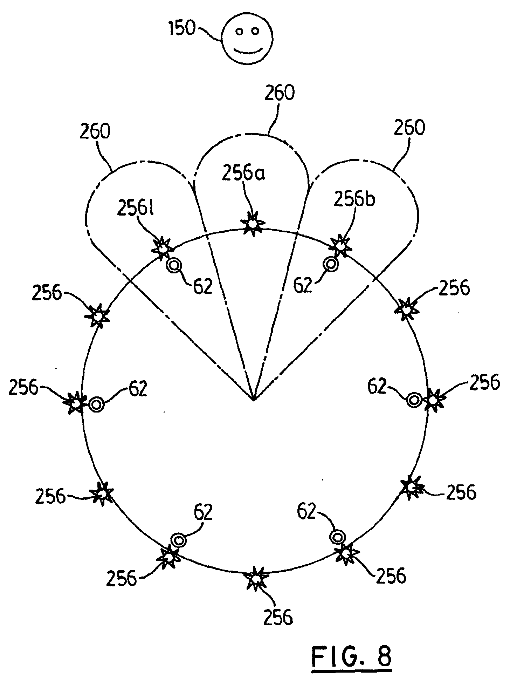

Turning now to Figures 7 and 8 an alternative LED arrangement for the conference unit 14 is shown. In this arrangement, the body of the conference unit accommodates twelve LEDs 256a to 2561. As a result, each LED is associated with the direction of only one narrow microphone beam 240. Also in this arrangement, when the DSP 70 is conditioned to the presentation mode, the LEDs associated with each of the three synthesised narrow microphone beams 260 are flashed. The LED associated with the microphone beam pointing in the direction closest to the active talker however flashes brighter than the other two flashing LEDs.

Although the indicators that provide a cue identifying the direction in which the microphone array has been steered are shown as LEDs, those of skill in the art will appreciate that other cues to identify the microphone array microphone beam focus direction can be used. Also, the particular LED color and flashing scheme described need not be followed. Virtually any scheme can be used to provide cues to indicate the direction of the microphone array microphone beam focus direction and mode of operation of the conference unit.

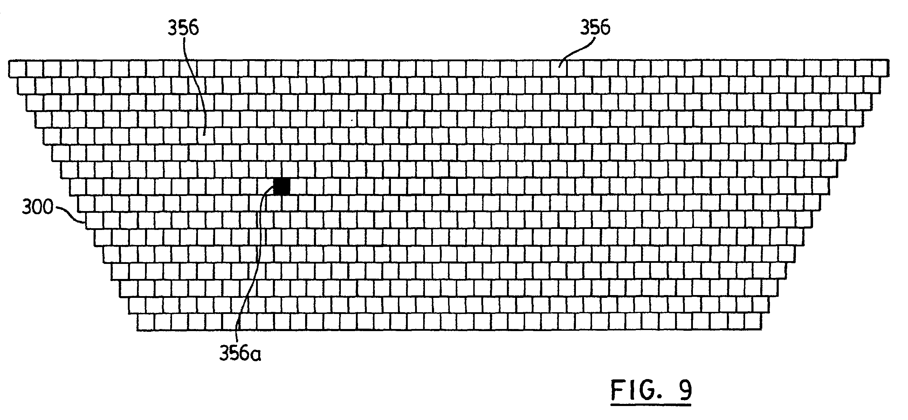

Turning now to Figure 9, another alternative conference unit visual indicator array to provide a visual indication of the direction of microphone array beam focus direction is shown. In this embodiment, the array includes a large planar array 300 of visual indicators 356 arranged to define an audience map of an auditorium or other environment. The visual indicator 356a associated with the location of the active talker is illuminated to provide a visual indication of the talker location. In the presentation mode, the visual indicator associated with the active talker is illuminated in one color and surrounding visual indicators are illuminated a different color.

Although preferred embodiments of the present invention have been described, those of skill in the art will appreciate that variations and modifications may be made without departing from the spirit and scope thereof as defined by the appended claims.

## Claims

1. A method of identifying talker location comprising the steps of:
picking up audio signals using a steerable microphone array;
processing the picked up audio signals to determine the location of an active talker;
steering the microphone array in the direction of the active talker; and
generating a cue to identify the direction in which the microphone array has been steered.

2. The method of claim 1 wherein said cue is a visual cue.

3. The method of claim 2 wherein said visual cue is generated by illuminating a light source associated with the direction in which the microphone array has been steered.

4. The method of claim 3 wherein said light source is a light emitting diode.

5. The method of claim 3 further comprising the step of freezing the microphone array in the direction in which the microphone array has been steered in response to an input command.

6. The method of claim 5 further comprising the step of changing the illumination of said light source to indicate visually that the microphone array has been frozen.

7. The method of claim 6 wherein during said changing said light source changes from a constant illumination and begins flashing.

8. The method of claim 3 further comprising the step of muting said microphone array in response to an input command.

9. The method of claim 8 wherein during said muting said light source changes color.

10. A method of identifying talker location comprising the steps of:
picking up audio signals;
processing the audio signals to determine the location of an active talker; and
generating a visual cue that identifies the location of said active talker.

11. The method of claim 10 wherein said visual cue is a selected one of a circular array of light sources.

12. The method of claim 10 wherein said visual cue is a selected one of a planar array of light sources.

13. A method of identifying talker location comprising the steps of:
picking up audio signals using a circular microphone array including a plurality of omni-directional microphones;
processing the picked up audio signals to determine the location of an active talker;
using the omni-directional microphones to synthesize narrow microphone beams pointing in the direction of the active talker; and
generating a cue to identify the microphone beam focus direction.

14. The method of claim 13 wherein said cue is a visual cue.

15. The method of claim 14 wherein said visual cue is generated by illuminating a selected one of a circular array of light sources, each of said light sources being associated with the direction of at least one microphone beam that can be synthesized by said microphone array.

16. The method of claim 15 further comprising the step of freezing the microphone array to maintain the synthesized narrow microphone beams irrespective of changes in picked up audio signals in response to an input command and changing the illumination of the selected one light source to indicate visually that the microphone array has been frozen.

17. The method of claim 15 further comprising the step of muting the microphone array in response to an input command and changing the illumination of at least the selected one light source to indicate visually that the microphone array has been muted.

18. The method of claim 17 wherein during said muting, all of the light sources in the array are illuminated in a manner to indicate visually that the microphone array has been muted.

19. A conference unit comprising:
a loudspeaker to broadcast audio signals;
a steerable microphone array to pick up audio signals;
a processor to process picked up audio signals to determine the location of an active talker and steer the microphone array in the direction of said talker; and
an indicator array responsive to said processor and including a plurality of indicators, each indicator being associated with a different microphone array steer direction, the indicator associated with the direction the microphone array has been steered being activated.

20. A conference unit according to claim 19 wherein said indicator array includes a plurality of visual indicators that illuminate when activated.

21. A conference unit according to claim 20 wherein said microphone array includes a circular array of omni-directional microphones and wherein said visual indicators are arranged in a circular array.

22. A conference unit according to claim 21 wherein said processor is responsive to at least one control unit generating messages in response to input commands.

23. A conference unit according to claim 22 wherein said processor in response to a presentation mode message generated by said at least one control unit, freezes said microphone array in its current direction and changes the manner in which the associated indicator is illuminated.

24. A conference unit according to claim 23 wherein said processor in response to a mute mode message generated by said at least one control unit mutes said microphone array and illuminates the visual indicators in a manner to signify that said microphone array has been muted.
